# EUROPEAN PATENT APPLICATION

(11) **EP 3 133 751 A1**
(43) Date of publication of application: **22.02.2017**
(21) Application number: 15306299.7
(22) Date of filing: 19.08.2015
(51) Int. Cl.: H04B 10/61

(54) **METHOD FOR NONLINEARITY COMPENSATION IN OPTICAL TRANSMISSION SYSTEMS**

(71) Applicant: ALCATEL LUCENT, 92100 Boulogne-Billancourt (FR)
(72) Inventor: SCHUH, Karsten, 70435 Stuttgart (DE); BUCHALI, Fred, 70435 Stuttgart (DE)
(74) Representative: MERH-IP Matias Erny Reichl Hoffmann Patentanwälte PartG mbB

(57) **Abstract**

This application relates to a method for compensating optical transmission impairments of at least one fiber link in an optical transmission system, wherein the optical transmission impairments comprising at least chromatic dispersion and fiber nonlinearities cause distortions to at least one signal transmitted through the at least one fiber link. The method comprises: estimating an amount of chromatic dispersion of the at least one fiber link, applying a first filtering step for compensating for an amount of fiber nonlinearities of the at least one fiber link, and applying a second filtering step for compensating for the amount of chromatic dispersion of the at least one fiber link. The first filtering step for compensating for the amount of fiber nonlinearities is applied prior to the second filtering step for compensating for the amount of chromatic dispersion. The step of applying the first filtering step comprises: obtaining power of the at least one signal transmitted through the at least one fiber link, filtering the obtained power of the at least one signal based on the estimated amount of chromatic dispersion of the at least one fiber link, and applying, based on the filtered obtained power of the at least one signal, a phase rotation to the at least one signal for compensating for the amount of fiber nonlinearities. The application further relates to a device for compensating optical transmission impairments.

## Description

### Technical Field

This application relates to compensation method and device for use in the field of optical communications, particularly for performing electrical compensation of linear and nonlinear fiber effects during optical transmission in coherent optical communications systems.

### Background

Optical transmission has been commonly employed for long-haul links by using optical fibers to transmit digital information at very high bit rates. Further enhancement of spectral efficiency can be achieved by applying advanced modulation formats and/or co-propagating one or more optical carriers, e.g. wavelengths or polarizations, over each fiber. However, the distance over which data may be transmitted in optical fibers before some form of regeneration is required may be limited by fiber transmission effects, which can be divided into two categories: linear and nonlinear effects. Linear effects may include chromatic dispersion (CD), polarization-mode dispersion (PMD), symbol timing offset and optical filtering. Nonlinear effects, some of which are induced by the "Kerr effect", may include self-phase modulation (SPM), cross-phase modulation (XPM), four-wave mixing (FWM) and nonlinear phase noise (NLPN). Especially for optical communications systems using advanced modulation formats and/or wavelength-division multiplexing (WDM) techniques, the influence of fiber transmission effects causes severe limitations in increasing the bandwidth-distance product of a fiber link in long-haul high-bit-rate optical transmission.

In recent years, with the development of coherent receivers based on Digital Signal Processing (DSP), electrical compensation techniques have turned up to be promising for mitigating the impact caused by the aforementioned transmission impairments in optical communications systems. After coherent detection, the signals can be sampled and processed by DSP to compensate for impairments caused by fiber transmission effects. Such digital electrical compensation is considered to be advantageous for mitigating fiber transmission impairments as it can offer great flexibility and adaptation. In particular, signal distortions due to linear and nonlinear transmission impairments can be jointly compensated through a "back-propagation" process of propagating the distorted signal through a "virtual" transmission span having characteristics that are precisely the inverse of the real transmission span.

Such digital back-propagation can be implemented by compensating some of the CD of the fiber in a first step and then compensating fiber nonlinearities using a second step. Both steps are alternately repeated until the CD of the fiber is completely compensated. Since the CD compensation step is usually implemented in the frequency domain, whereas the nonlinearity compensation step is implemented in the time domain, either fast Fourier transform (FFT) or inverse fast Fourier transform (IFFT) is required for calculation in each step. In general, the number of digital back-propagation steps must be increased for achieving better compensation accuracy in order to obtain the required signal quality. Therefore, this digital back-propagation solution desires extremely high computational complexity, restricting its implementation in real-time coherent optical transmission systems.

Accordingly, there is a need for a compensation method and corresponding device that are able to compensate distortions of optical signals due to fiber transmission impairments in order to enhance the reach of an optical transmission channel in presence of fiber nonlinearities, requiring significantly reduced computational efforts compared to prior art techniques.

### Summary

In view of this need, the present document proposes a compensation method and device having the features of the respective independent claims for compensating optical transmission impairments of at least one fiber link in an optical transmission system, where the optical transmission impairments comprise at least chromatic dispersion and fiber nonlinearities which may cause distortions to at least one signal transmitted through the at least one fiber link.

An aspect of the disclosure relates to a compensation method. The method may comprise estimating an amount of chromatic dispersion of the at least one fiber link. The method may comprise applying a first filtering step for compensating for an amount of fiber nonlinearities of the at least one fiber link and applying a second filtering step for compensating for the amount of chromatic dispersion of the at least one fiber link. The first filtering step for compensating for the amount of fiber nonlinearities may be applied prior to the second filtering step for compensating for the amount of chromatic dispersion. The first filtering step may be implemented in time domain, whereas estimating the amount of chromatic dispersion and the second filtering step may be, preferably, implemented in frequency domain. This may require one FFT and one IFFT operation to convert the at least one signal transmitted through the at least one fiber link from frequency domain into time domain, and vice versa. The step of applying the first filtering step may comprise obtaining power of the at least one signal transmitted through the at least one fiber link. The step of applying the first filtering step may further comprise filtering the obtained power of the at least one signal based on the estimated amount of chromatic dispersion of the at least one fiber link and applying, based on the filtered obtained power of the at least one signal, a phase rotation to the at least one signal for compensating for the amount of fiber nonlinearities.

Configured as above, by filtering the obtained power of the at least one signal based on the estimated amount of chromatic dispersion of the at least one fiber link and applying, based on the filtered obtained power of the at least one signal, a phase rotation to the at least one signal for compensating for the amount of fiber nonlinearities, only one FFT operation and one IFFT operation are required for compensating for accumulated CD and fiber nonlinearities. Since no additional FFT or IFFT operation is required according to the disclosure, the implementation complexity of the solution proposed according to the disclosure is significantly reduced and can be assumed to be implementable in terms of the preferred overall digital signal processing (DSP) complexity.

According to the disclosure, the obtained power of the at least one signal may be filtered using one or more low-pass filters (LPFs). The one or more LPFs may have characteristics, e.g. a filter transfer function that may be adjustable. The one or more LPFs may also relate to a parameter that dynamically change schemes of the one or more LPFs. For example, one of the LPFs may be switched off or increases its weighting when the link condition is changed. The method may further comprise determining the number and values of coefficients of the one or more LPFs and/or determining a weighting factor for the one or more LPFs. The number and the values of coefficients of the one or more LPFs may be determined based on the estimated amount of chromatic dispersion of the at least one fiber link. The weighting factor for the one or more LPFs may be determined based on an amount of nonlinear phase rotation occurring during fiber transmission. The method may further comprise updating or tuning the number and the values of coefficients of the one or more LPFs by a Q-factor Q_{NL}. The method optionally comprises adapting the weighting factor of the one or more LPFs to optimum performance by a Q-factor Q_{NL}. It is appreciated that by low-pass filtering the obtained power of the at least one signal, the number of FFT/IFFT operations can be significantly reduced, avoiding extremely high computational efforts. It is further appreciated that the compensation performance, i.e. the output signal quality, can be optimized by updating or tuning the number and the values of coefficients of the one or more LPFs and/or adapting the weighting factor of the one or more LPFs.

According to the disclosure, the method optionally comprises splitting the at least one signal into an additional path and measuring the power of the at least one signal in the additional path. The at least one signal may be split into the additional path prior to an optical receiver. The step of filtering the obtained power of the at least one signal may be optionally performed in the additional path. The method may further comprise compensating for a frequency offset between a local oscillator (LO) and a transmitter laser. It is appreciated that the processing of the power of the at least one signal can be accomplished using low-bandwidth components, thereby reducing the implementation cost.

In embodiments, the method may be optionally applied for compensating optical transmission impairments in a wavelength-division multiplexing (WDM) system. The method may comprise measuring the power of the at least one signal in front of a channel demultiplexer and distributing the power of the at least one signal to individual receivers, thereby reducing the implementation cost using low-bandwidth components.

In embodiments, the method may further comprise compensating for nonlinear phase distortions of a transmitter after applying the second filtering step for compensating for the amount of chromatic dispersion, thereby further improving the output signal quality.

In embodiments, the method may further comprise compensating for the distortions caused by fiber nonlinearities that occur in the first few kilometers of the fiber link. The distortions caused by fiber nonlinearities that occur in the first few kilometers of the fiber link may be compensated by a certain amount of residual dispersion. The method may further comprise compensating for the certain amount of residual dispersion using a linear compensator, e.g. a butterfly filter. It is appreciated that further improvement in the output signal quality can be thereby achieved.

According to the disclosure, the method may further comprise converting the at least one signal from optical domain into electrical domain. The method may further comprise converting the at least one signal from analog domain into digital domain. The at least one signal may be converted from analog domain into digital domain prior to estimating an amount of chromatic dispersion of the at least one fiber link. The at least one signal may be converted from optical domain into electrical domain before converting the at least one signal from analog domain into digital domain.

Configured as above, by measuring and filtering the power of the at least one signal, and preferably, further multiplying the filtered power with a weighting factor in an additional path, it may be sufficient to apply a phase rotation to the at least one signal in the signal path for compensating for the amount of fiber nonlinearities. Advantageously, the processing of the power is done in an additional parallel path and only a phase rotation is performed in the signal path, thereby lowering overall hardware requirements and therefore reducing the cost of hardware implementation.

Another aspect of the disclosure relates to a compensation device. The device may comprise a chromatic dispersion measuring unit configured to estimate an amount of chromatic dispersion of the at least one fiber link, a first filtering unit configured to apply a first filtering step for compensating for an amount of fiber nonlinearities of the at least one fiber link, and a second filtering unit configured to apply a second filtering step for compensating for the amount of chromatic dispersion of the at least one fiber link. The second filtering unit may apply the second filtering step to the at least one signal output from the first filtering unit. The first filtering step may be implemented in time domain, whereas estimating the amount of chromatic dispersion and the second filtering step may be, preferably, implemented in frequency domain. This may require one FFT and one IFFT operations to convert the at least one signal transmitted through the at least one fiber link from frequency domain into time domain, and vice versa. The first filtering unit may be configured to obtain power of the at least one signal transmitted through the at least one fiber link. The first filtering unit may be further configured to filter, using one or more low-pass filters (LPFs), the obtained power of the at least one signal based on the estimated amount of chromatic dispersion of the at least one fiber link and to apply, based on the filtered obtained power of the at least one signal, a phase rotation to the at least one signal for compensating for the amount of fiber nonlinearities.

Implementations of the device may include using, but not limited to, one or more processor, one or more application specific integrated circuit (ASIC) and/or one or more field programmable gate array (FPGA). Implementations of the device may also include using other conventional and/or customized hardware.

According to the disclosure, the one or more LPFs may have characteristics, e.g. filter transfer function that may be adjustable. The one or more LPFs may also relate to a parameter that dynamically change schemes of the one or more LPFs. For example, one of the LPFs may be switched off or increased its weighting when the link condition is changed. The number and values of coefficients of the one or more LPFs and/or a weighting factor for the one or more LPFs may be determined based on the amount of chromatic dispersion of the at least one fiber link and/or an amount of nonlinear phase rotation occurring during fiber transmission. The number and the values of coefficients of the one or more LPFs may be optionally updated or tuned by a Q-factor Q_{NL} and the weighting factor of the one or more LPFs may be optionally adapted to optimum performance by a Q-factor Q_{NL}.

Configured as above, by filtering the obtained power of the at least one signal based on the estimated amount of chromatic dispersion of the at least one fiber link and applying, based on the filtered obtained power of the at least one signal, a phase rotation to the at least one signal for compensating for the amount of fiber nonlinearities, only one FFT and one IFFT operations are required for compensating for accumulated CD and fiber nonlinearities. Since no additional FFT or IFFT operations is required according to the disclosure, the implementation complexity of the solution proposed according to the disclosure is significantly reduced and can be assumed to be implementable almost for free in comparison the overall digital signal processing (DSP) complexity.

According to the disclosure, the device may further comprise a splitter to split the at least one signal into an additional path, wherein the power of the at least one signal may be optionally measured through a power measuring unit in the additional path. The at least one signal may be split into the additional path prior to an optical receiver. The obtained power of the at least one signal may be filtered in the additional path. The at least one processor may be configured to further compensate for a frequency offset between a local oscillator (LO) and a transmitter laser.

In embodiments, the device may be optionally applied for compensating optical transmission impairments in a wavelength-division multiplexing (WDM) system. The device may be configured to measure the power of the at least one signal through a power measuring unit in front of a channel demultiplexer and to distribute the power of the at least one signal through a power distributing unit to individual receivers.

In embodiments, the compensation device may be configured to further compensate for nonlinear phase distortions of a transmitter using an additional nonlinear compensator. The compensation device may be configured to compensate for nonlinear phase distortions of a transmitter after applying the second filtering step for compensating for the amount of chromatic dispersion.

In embodiments, the compensation device may be configured to further compensate, using a linear compensator, for a certain amount of residual dispersion. The certain amount of residual dispersion may be used to compensate for the distortions caused by fiber nonlinearities occurring in the first few kilometers of the fiber link. The linear compensator for compensating the certain amount of residual dispersion may be, for example, a butterfly filter.

According to the disclosure, the device may further comprise an optical-to-electrical converter to convert the at least one signal from optical domain into electrical domain. The device may further comprise an analog-to-digital converter to convert the at least one signal from analog domain into digital domain. The at least one signal may be converted from analog domain into digital domain prior to estimating an amount of chromatic dispersion of the at least one fiber link. The at least one signal may be converted from optical domain into electrical domain before converting the at least one signal from analog domain into digital domain.

Configured as above, by measuring and filtering the power of the at least one signal, and preferably, further multiplying the filtered power with a weighting factor in an additional path, one should only apply a phase rotation to the at least one signal in the signal path for compensating for the amount of fiber nonlinearities. Advantageously, the processing of the power is done in an additional parallel path and only a phase rotation is performed in the signal path, thereby lowering overall hardware requirements and therefore reducing the cost of hardware implementation.

It will be appreciated that method steps and device features may be interchanged in many ways. In particular, the details of the disclosed device can be implemented as a method, as the skilled person will appreciate.

### Brief Description of the Figures

Embodiments of the disclosure are explained below in an exemplary manner with reference to the accompanying drawings, wherein
**Fig. 1** schematically illustrates a conventional digital back-propagation model;
**Fig. 2(a)** schematically illustrates an example of a backpropagation-less nonlinearity compensation model according to embodiments of the disclosure;
**Fig. 2(b)** illustrates processing steps for the backpropagation-less nonlinearity compensation model according to embodiments of the disclosure;
**Fig. 2(c)** schematically illustrates processing steps for a NL compensation step of the backpropagation-less nonlinearity compensation model according to embodiments of the disclosure;
**Fig. 2(d)** schematically illustrates another example of processing steps for a NL compensation step of the backpropagation-less nonlinearity compensation model according to embodiments of the disclosure;
**Fig. 2(e)** schematically illustrates another example of a backpropagation-less nonlinearity compensation model according to embodiments of the disclosure;
**Fig. 3(a)** schematically illustrates a design example using a single LPF for a NL compensation step of the backpropagation-less nonlinearity compensation model of **Fig. 2(d)** according to embodiments of the disclosure;
**Fig. 3(b)**schematically illustrates another design example using three fixed parallel LPFs for a NL compensation step of the backpropagation-less nonlinearity compensation model of **Fig. 2(d)** according to embodiments of the disclosure;
**Fig. 3(c)** schematically illustrates another design example using three variable parallel LPFs for a NL compensation step of the backpropagation-less nonlinearity compensation model of **Fig. 2(d)** according to embodiments of the disclosure;
**Fig. 4** schematically illustrates another example of a backpropagation-less nonlinearity compensation model according to embodiments of the disclosure; and
**Fig. 5** schematically illustrates an example of a backpropagation-less nonlinearity compensation model using measured signal power in wavelength-division-multiplexing (WDM) transmission according to embodiments of the disclosure;

### Detailed Description

The basic idea in this disclosure consists in compensating for at least a part of the fiber nonlinearities in the digital electrical domain in front of a chromatic dispersion (CD) compensator, e.g. a CD filter, based on low pass filtering of the optical power and deriving the required phase rotation which is then applied to the signal. This results in significantly lower computational complexity, which overcomes the difficulties of requiring high computational complexity associated with conventional digital back-propagation.

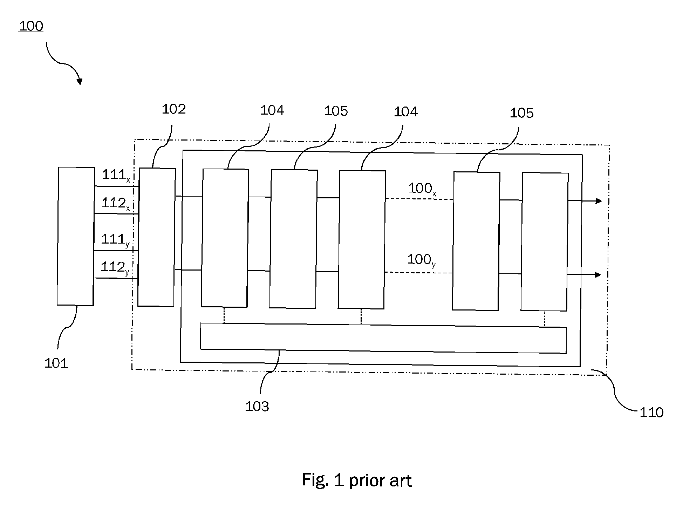

**Fig. 1** is a schematic illustration of a conventional digital back-propagation model. An optical receiver 100 receives optical signals output from a transmission link and converts the optical signals into corresponding electrical signals (not shown). The received optical signals may comprise two polarization-division-multiplexed optical signal components, where one signal component is the signal Ex of a first polarization plane, i.e. the x-plane, and the other signal component is the signal Ey of the y-plane, which is orthogonal to the first polarization plane. Each of the converted electrical signals comprises in-phase and quadrature components in an analog form and then is sampled via an analog-to-digital converter (ADC) 101, resulting in corresponding time-discrete digital sequences, denoted by 111x, 112x, 111y and 112y. In general, oversampling is required in the ADC 101, which enables all of the signal synchronization, equalization and decoding to be performed within the digital domain. The sampled sequences 111x and 112x are combined for representing a sampled first electrical complex signal 100x which corresponds to Ex, and 111y, 112y are combined for representing a sampled second electrical complex signal 100y which corresponds to Ey. The sampled electrical complex signals 100x, 100y are then provided to a processor 110. The processor 110 determines an overall amount of accumulated CD that is caused by the transmission link with a CD estimation block 102. The CD estimation block 102 may be implemented as described in detail in the document "Blind Adaptive Chromatic Dispersion Compensation and Estimation for DSP-Based Coherent Optical Systems', Corsini et.al., Journal of Lightwave Technology, Volume 31 , Issue 13, July 1, 2013, pages 2131 - 2139", which is incorporated herein by reference in their entirety. After having passed the CD estimation block 102, the sampled electrical complex signals 100x, 100y may be thereafter processed by conventional digital back-propagation which is usually performed with a segmented CD filter 103 comprising individual CD filters 104 together with nonlinearity (NL) compensation steps 105 to compensate distortions of the received signals caused by CD and fiber nonlinearities, respectively. The sampled electrical complex signals 100x, 100y are filtered by first a CD-filter segment 104 followed by a NL compensation step 105. The filtering of sampled electrical complex signals 100x, 100y alternates between CD filters 104 and NL compensation steps 105 until the overall amount of accumulated CD of the transmission link is fully compensated. Each CD-filter segment 104 may be carried out according to the document "S. Savory, 'Digital filters for coherent optical receivers,' Opt. Express 16, 804-817 (2008)", which is incorporated herein by reference in their entirety.

The idea of the conventional digital back-propagation model is to jointly use a CD-filter segment and a NL compensation step to form a virtual fiber segment, and to combine one or more such sequential virtual fiber segments as an "inverse fiber link". The output from each virtual fiber segment provides the input to the next virtual fiber segment, and the output from the final segment comprises a distortion-compensated sampled electrical complex signals. The initial (input) segment of the conventional digital back-propagation model is associated with the receiving end of the actual transmission link, while the final segment is virtually associated with the transmitting end of the link.

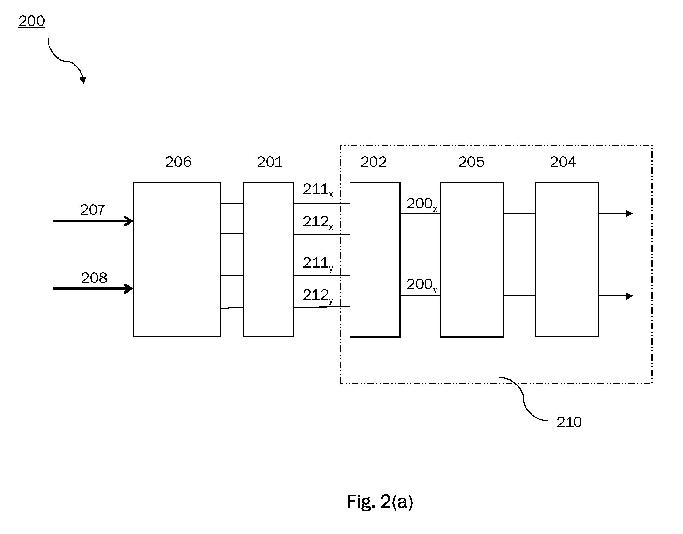

**Fig. 2(a)** schematically illustrates an example of a backpropagation-less nonlinearity compensation model according to embodiments of the disclosure. A coherent optical receiver 200 receives optical signals 207 output from a transmission link. The received optical signals 207 may comprise two polarization-division-multiplexed optical signal components, where one signal component is the signal Ex of a first polarization plane, i.e. the x-plane, and the other signal component is the signal Ey of the y-plane, which is orthogonal to the first polarization plane. It should be appreciated by those skilled in the art that any block diagrams for two polarization-division-multiplexed optical signal components herein represent conceptual views of illustrative embodiments of the disclosure. A person of skill in the art would readily recognize that steps of the disclosed method can be applied also to signals comprising only one polarization component, i.e. Ex or Ey.

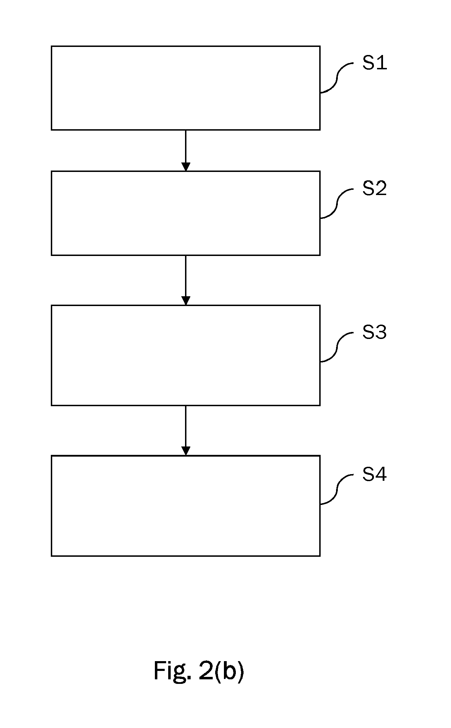

In a preferred embodiment, the coherent receiver 200 comprises an optical local oscillator 208 and an optical hybrid mixer 206 which may comprise polarization and phase diversity hybrid together with optical-to-electrical converters (not shown) converting the optical signals into corresponding electrical signals. Each of the converted electrical signals comprises in-phase and quadrature components in an analog form and then is sampled via an ADC 201, resulting in corresponding time-discrete digital sequences, denoted by 211x, 212x, 211y and 212y. In general, oversampling is applied in the ADC 201, which enables all of the signal synchronization, equalization and decoding to be performed within the digital domain. The sampled sequences 211x and 212x are combined for representing a sampled first electrical complex signal 200x which corresponds to Ex, and 211y, 212y are combined for representing a sampled second electrical complex signal 200y which corresponds to Ey. The sampled electrical complex signals 200x, 200y are then provided to a processor 210. The processor 210 determines an overall amount of accumulated CD that is caused by the transmission link with a CD estimation block 202. The CD estimation block 202 may be implemented as described in detail in the document "Blind Adaptive Chromatic Dispersion Compensation and Estimation for DSP-Based Coherent Optical Systems', Corsini et.al., Journal of Lightwave Technology, Volume 31, Issue 13, July 1, 2013, pages 2131 - 2139", which is incorporated herein by reference in their entirety. After having passed the CD estimation block 202, the sampled electrical complex signals 200x, 200y may be thereafter processed by a NL compensation step 205 followed by a bulk CD filter 204 to compensate distortions of the received optical signals 207 caused by fiber nonlinearities and CD, respectively. The bulk CD filter 204 may be carried out according to the conditions described in the document "S. Savory, 'Digital filters for coherent optical receivers,' Opt. Express 16, 804-817 (2008)", which is incorporated herein by reference in their entirety, to compensate for the overall amount of accumulated CD of the transmission link. The inverse filter of the aforementioned document may be implemented in the frequency domain for higher computational efficiency. Corresponding illustration of processing steps for the backpropagation-less nonlinearity compensation model according to embodiments of the disclosure is also shown in Fig. 2(b). The processing steps may comprise receiving, at the receiver 200, one or more signals transmitted through at least one fiber link (S1), estimating an amount of chromatic dispersion of the at least one fiber link using the CD estimation block 202 (S2), applying a first filtering step, e.g. the NL compensation step 205, for compensating for an amount of fiber nonlinearities of the at least one fiber link (S3) and applying a second filtering step, e.g. the bulk CD filter 204, for compensating for the amount of chromatic dispersion of the at least one fiber link (S4).

It is appreciated that, by filtering the signal power based on the estimated amount of chromatic dispersion and applying a phase rotation to the signal based on the filtered signal power, only one FFT operation and one IFFT operation are required for compensating for accumulated CD and fiber nonlinearities, thereby enhancing the computational efficiency.

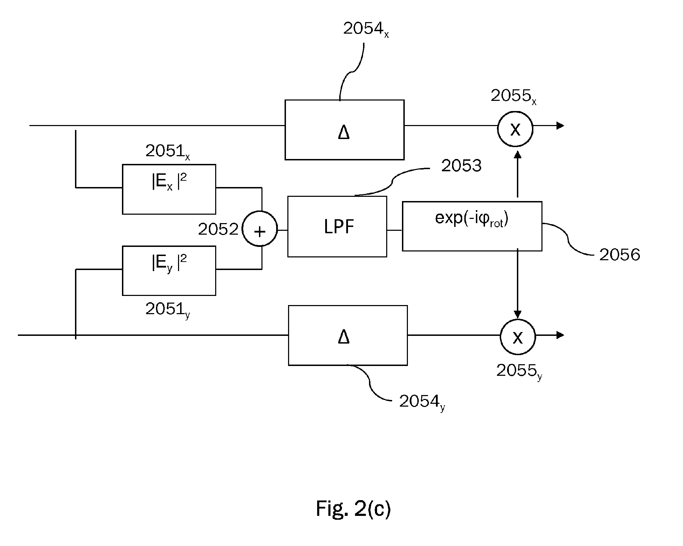

Fig. 2(c) schematically illustrates processing steps for a NL compensation step 205 of the backpropagation-less nonlinearity compensation model according to embodiments of the disclosure. The sampled electrical complex signals 200x, 200y output from the CD estimation block 202 are used for calculating a signal power using power calculating operators 2051x, 2051y and an addition operator 2052. The signal power is then filtered in the time domain using a low pass filter 2053 which may be a cosine-square filter. Subsequently, an amount of a phase rotation ϕᵣₒₜ is determined depending on the filtered signal power and each phase of the sampled electrical complex signals 200x, 200y is then corrected by the determined phase rotation ϕᵣₒₜ via operators 2056 and 2055x, 2055y. A delay element 2054x, 2054y preferably compensates a processing delay caused by the processing operations 2051x, 2051y, 2052, 2053 and 2056. The resulting nonlinearity compensated sampled electrical complex signals 200x, 200y are then processed by the bulk CD filter 204.

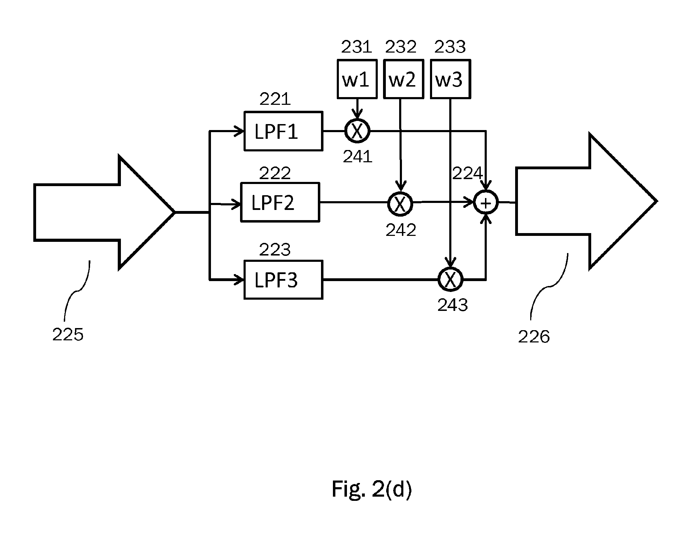

**Fig. 2(d)** schematically illustrates another example of processing steps for a NL compensation step 205 of the backpropagation-less nonlinearity compensation model according to embodiments of the disclosure. The processing steps comprise a scheme with three parallel low-pass filters (LPFs) 221, 222, 223. The sampled electrical complex signals 200x, 200y output from the CD estimation block 202 may be used for calculating a signal power 225 using power calculating operators 2051x, 2051y and an addition operator 2052 as shown in Fig. 2(c), and the calculated signal power 225 may be then filtered in the time domain using the LPFs 221, 222, 223. The filters 221, 222, 223 may have different bandwidths and each filter output can be optionally weighted using a weighting factor 231, 232, 233 before they are summed up. Subsequently, an amount of a phase rotation ϕᵣₒₜ may be determined depending on the filtered signal power P_{filtered} and fiber nonlinearity coefficient y, and each phase of the sampled electrical complex signals 200x, 200y may be then corrected by the determined phase rotation, i.e. nonlinear phase rotation 226, via operators 2056 and 2055. The resulting nonlinearity compensated sampled electrical complex signals 200x, 200y may be then processed by the subsequent bulk CD filter 204. Further, the number of taps may be preferably equal for all filters 221, 222, 223 to avoid time differences between the different paths, and optionally, taps that are not required may be set to 0.

The above reference to a scheme with three parallel LPFs is understood to indicate an example, without intended limitation of the present disclosure. In another embodiment, a single filter can also be used by combining the weighted filter coefficients of the three parallel filters 221, 222, 223 of the example in Fig. 2(d). In other embodiments, any number of LPFs can be used for implementations covered in the scope of the application.

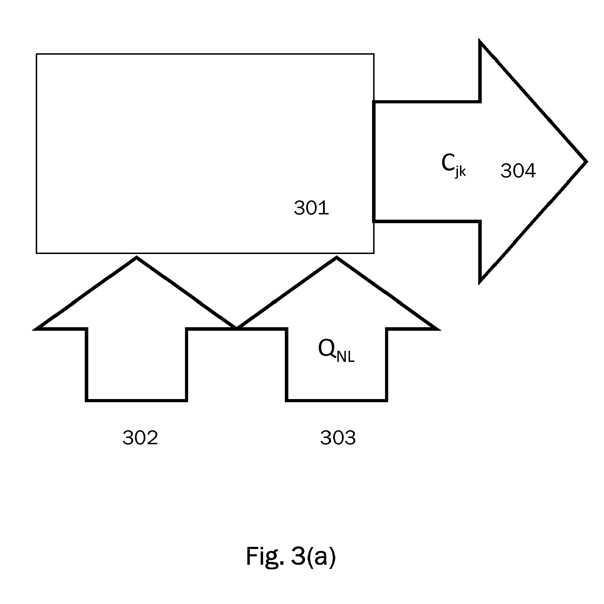

**Fig. 3(a)****-(c)** schematically illustrate design examples of LPFs 221, 222, 223 used for a NL compensation step 205 of the backpropagation-less nonlinearity compensation model of **Fig. 2(d)** according to embodiments of the disclosure. Notably, the frequency characteristic of LPFs 221, 222, 223 may be determined or chosen depending on the amount of the chromatic dispersion of the fiber link. The weighting factors 231, 232, 233 for LPFs 221, 222, 223 may be adapted to the amount of nonlinear phase rotation occurring during fiber transmission, depending on the amount of launch power which is applied when entering fiber transmission, the nonlinearity coefficient of deployed fibers or transmission length. The design of LPFs 221, 222, 223 may be realized via, for example, but not limited to, the following schemes with look-up tables.

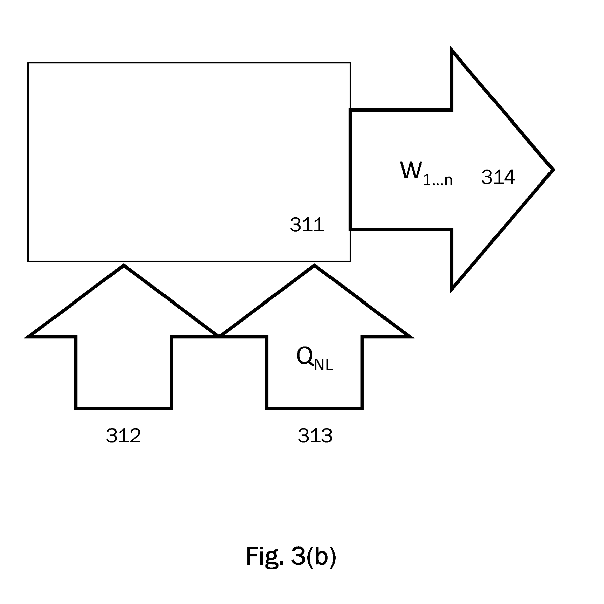

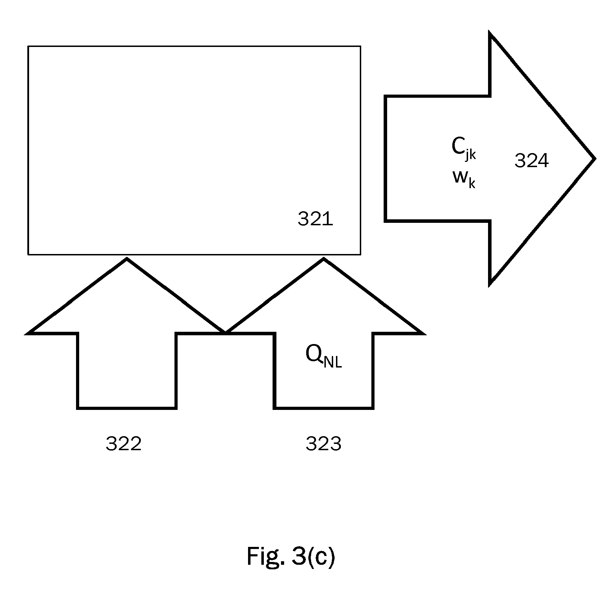

**Fig. 3**(**a**) schematically illustrates a design example using a single LPF 221, 222, 223 for a NL compensation step 205 of the backpropagation-less nonlinearity compensation model of **Fig. 2(d)** according to embodiments of the disclosure. The scheme may comprise a look-up table for filter coefficients 301 for deriving the filter coefficients Cⱼₖ 304 of LPFs 221, 222, 223. The number of the filter coefficients, i.e. the filter length, and values of the filter coefficients may be chosen depending on the estimated overall amount of accumulated CD 302 in the transmission link which may be obtained from the CD estimation block 202 preceding the NL compensation step 205. Moreover, the number of the filter coefficients and the values of the filter coefficients may be further updated or tuned by a Q-factor Q_{NL} 303. The Q-factor Q_{NL} 303 may be a quality parameter indicating a signal quality of the received signal 207, which may be determined according to the document "Pauluzzi, D.R.; Beaulieu, N.C., 'A comparison of SNR estimation techniques for the AWGN channel' Communications, IEEE Transactions on , vol.48, no.10, pp.1681,1691, Oct 2000", which is incorporated herein by reference in their entirety. For example, by feeding back a Q-factor from the output of a forward error correction (FEC) decoder, the number of the filter coefficients and the values of the filter coefficients can be further updated and/or tuned properly.

**Fig. 3(b)** schematically illustrates another design example usingthree fixed parallel LPFs 221, 222, 223 for a NL compensation step 205 of the backpropagation-less nonlinearity compensation model of **Fig. 2(d)** according to embodiments of the disclosure. The scheme may comprise a look-up table for weighting factors 311 for deriving the weighting factors W_{1...n} 314 of LPFs 221, 222, 223 (n=3). The weighting factors 314 may be determined based on the estimated overall amount of accumulated CD 312 in the transmission link which may be obtained from the CD estimation block 202 preceding the NL compensation step 205. The weighting factors 314 may be adapted to the amount of nonlinear phase rotation occurring during fiber transmission, depending on the amount of launch power which is applied when entering fiber transmission, the nonlinearity coefficient of deployed fibers or transmission length. The weighting factors 314 may be further adapted to optimum performance by a Q-factor Q_{NL} 313. The Q-factor Q_{NL} 313 may be a quality parameter indicating a signal quality of the received signal 207. The weighting factors 314 may be predetermined with a starting value and adapted in an iterative manner, which may be carried out by, for example, but not limited to, measuring the quality parameter for successive time instances and adapting the weighting factors 314 based on observed changes of the quality parameter over time until the optimum performance has been reached. In an embodiment, when using the scheme of **Fig. 3(b)****,** if the respective bandwidths of the three parallel filters are fixed corresponding to certain amounts of CD, e.g. 1500ps/nm, 5000ps/nm and 8000ps/nm, the filters may be selected by the weighting factors 314. It is to be noted that, if a filter of LPFs 221, 222, 223 is not required it can be optionally switched off by setting the corresponding weighting factor 314 to 0.

**Fig. 3(c)** schematically illustrates another design example using three variable parallel LPFs 221, 222, 223 for a NL compensation step 205 of the backpropagation-less nonlinearity compensation model of **Fig. 2(d)** according to embodiments of the disclosure. The scheme may comprise a look-up table for filter coefficients and weighting factors 321 for deriving and controlling the weighting factors Wₖ as well as the filter coefficients Cⱼₖ 324 of the LPFs 221, 222, 223. The number and values of the filter coefficients 324 may be determined depending on the estimated overall amount of accumulated CD 322 in the transmission link which may be obtained from the CD estimation block 202 preceding the NL compensation step 205. Furthermore, the weighting factors 324 may be optionally adapted to the amount of nonlinear phase rotation occurring during fiber transmission. The weighting factors 324 may be further adapted to optimum performance by a Q-factor Q_{NL} 323. The Q-factor Q_{NL} 323 may be a quality parameter indicating a signal quality of the received signal 207. The weighting factors 324 may be predetermined with a starting value and adapted in an iterative manner, which may be carried out by, for example, but not limited to, measuring the quality parameter for successive time instances and adapting the weighting factors 324 based on observed changes of the quality parameter over time until the optimum performance has been reached.

The above reference to a scheme with three parallel LPFs is understood to indicate an example, without intended limitation of the present disclosure. In another embodiment, a single filter can also be used by combining the weighted filter coefficients of the three parallel filters 221, 222, 223 of the example in **Fig. 2(d)****.** In other embodiments, any number of LPFs can be used for implementations covered in the scope of the application.

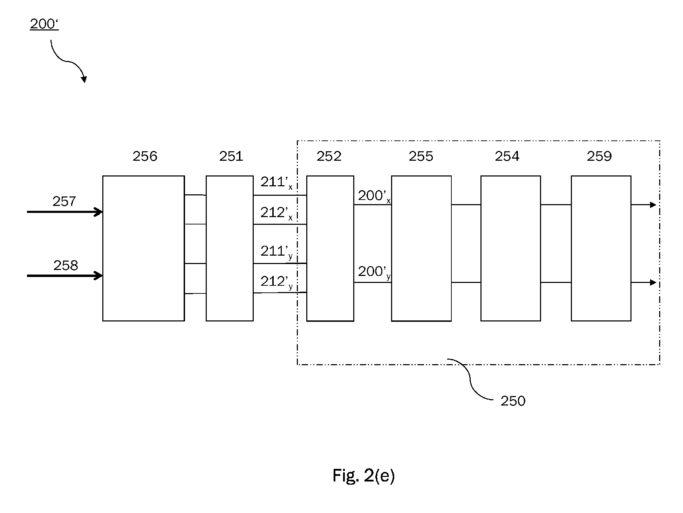

**Fig. 2(e)** schematically illustrates another example of a backpropagation-less nonlinearity compensation model according to embodiments of the disclosure. A coherent optical receiver 200' receives optical signals 257 output from a transmission link. The received optical signals 257 may comprise two polarization-division-multiplexed optical signal components, where one signal component is the signal Ex of a first polarization plane, i.e. the x-plane, and the other signal component is the signal Ey of the y-plane, which is orthogonal to the first polarization plane. In a preferred embodiment, the coherent receiver 200' comprises an optical local oscillator 258 and an optical hybrid mixer 256 which may comprise polarization and phase diversity hybrid together with optical-to-electrical converters (not shown) converting the optical signals into corresponding electrical signals. Each of the converted electrical signals comprises in-phase and quadrature components in an analog form and then is sampled via an ADC 251, resulting in corresponding time-discrete digital sequences, denoted by 211'x, 212'x, 211'y and 212'y. In general, oversampling is applied in the ADC 251, which enables all of the signal synchronization, equalization and decoding to be performed within the digital domain. The sampled sequences 211'x and 212'x are combined for representing a sampled first electrical complex signal 200'x which corresponds to Ex, and 211'y, 212'y are combined for representing a sampled second electrical complex signal 200'y which corresponds to Ey. The sampled electrical complex signals 200'x, 200'y are then provided to a processor 250. The processor 250 determines an overall amount of accumulated CD that is caused by the transmission link with a CD estimation block 252. The CD estimation block 252 may be implemented similar to the CD estimation block 202 in the processor 210 of **Fig. 2(a)**. After having passed the CD estimation block 252, the sampled electrical complex signals 200'x, 200'y may be thereafter processed by a NL compensation step 255 followed by a bulk CD filter 254 to compensate distortions of the received signals 257 caused by fiber nonlinearities and CD, respectively. The bulk CD filter 254 may be carried out using similar methods that have been applied to the bulk CD filter 204 in the processor 210 of **Fig. 2(a)**. The NL compensation step 255 may comprise a scheme similar to **Fig. 2(d)** with any of the LPF design examples disclosed in Fig. **3(a)****-(c).** It is appreciated that the processor 250 may be configured to further apply an additional nonlinear phase correction by adding another NL compensation step 259 after the bulk CD filter 254 to compensate for nonlinear phase distortions of the transmitter, i.e. phase offset compensation. Preferably, the nonlinear distortions that occur in the first few kilometers of the fiber link may be compensated for by choosing a certain amount of residual dispersion that is not compensated by the CD compensation. This amount of residual dispersion may be then compensated by a butterfly filter (not shown) that realizes the equalization and possibly the polarization demultiplexing.

It is further appreciated that by calculating the signal power after the CD estimation block 202, 252, low pass filtering the signal power and applying the phase rotation in front of the bulk CD-filter 204, 254, only one FFT and one IFFT operations are required for compensating for accumulated CD and fiber nonlinearities. Since no additional FFT or IFFT is required by using the backpropagation-less nonlinearity compensation model according to embodiments of the disclosure, the implementation complexity of the solution proposed according to embodiments of the disclosure is extremely low in comparison to the conventional digital back-propagation model, which can be assumed to be implementable in terms of the preferred overall digital signal processing (DSP) complexity.

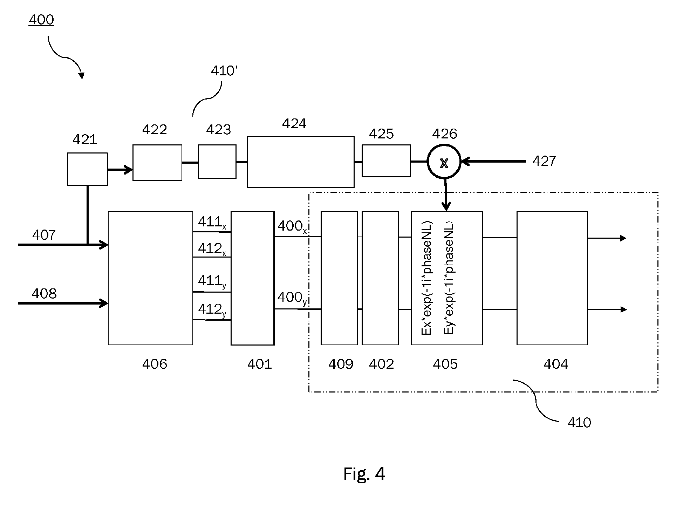

**Fig. 4** schematically illustrates another example of a backpropagation-less nonlinearity compensation model according to embodiments of the disclosure. A coherent optical receiver 400 receives optical signals 407 output from a transmission link. The received optical signals 407 may comprise two polarization-division-multiplexed optical signal components, where one signal component is the signal Ex of a first polarization plane, i.e. the x-plane, and the other signal component is the signal Ey of the y-plane, which is orthogonal to the first polarization plane. It should be appreciated by those skilled in the art that any block diagrams for two polarization-division-multiplexed optical signal components herein represent conceptual views of illustrative embodiments of the disclosure. A person of skill in the art would readily recognize that steps of the disclosed method can be applied also to signals comprising only one polarization component, i.e. Ex or Ey.

In a preferred embodiment, the received optical signal 407 may be split into an additional path 410' through, e.g. a splitter. The additional path 410' may comprise an optional optical filter 421 to limit the bandwidth for ADC, an optical-to- electrical converter 422 and a LPF 425. The received optical signal power may be measured separately in the additional path 410' with a low bandwidth photodiode and an additional ADC 423. The measured signal power may then pass a resampling and retiming block 424, e.g. a clock recovery, to synchronize the measured power sequence and the signal sequence, and subsequently be filtered by the LPF 425. The LPF 425 may be implemented using a scheme similar to **Fig. 2(d)** with any of the LPF design examples disclosed in **Fig. 3(a)****-(c).** The coherent receiver 400 may further comprise an optical local oscillator 408 and an optical hybrid mixer 406 which may comprise polarization and phase diversity hybrid together with optical-to-electrical converters (not shown) converting the optical signals into corresponding electrical signals. Each of the converted electrical signals comprises in-phase and quadrature components in an analog form and then is sampled via an ADC re-sampling block 401, resulting in corresponding time-discrete digital sequences. In general, oversampling is applied in the ADC re-sampling block 401, which enables all of the signal synchronization, equalization and decoding to be performed within the digital domain. It is noted that the sampled sequences on the x-plane are combined for representing a sampled first electrical complex signal 400x which corresponds to Ex, and the sampled sequences on the y-plane are combined for representing a sampled second electrical complex signal 400y which corresponds to Ey. The sampled electrical complex signals 400x, 400y are then provided to a processor 410. Since the measured optical power is a baseband signal and a frequency offset on the signal would affect the effectiveness of the compensation, the processor 410 may be configured to further compensate for the frequency offset between the local oscillator 408 and transmit laser (not shown) using a frequency offset correction step 409. The processor 410 may then determine an overall amount of accumulated CD that is caused by the transmission link with a CD estimation block 402. The CD estimation block 402 may be implemented similar to the CD estimation block 202 in the processor 210 of **Fig. 2(a)**. After having passed the CD estimation block 402, the sampled electrical complex signals 400x, 400y may be thereafter processed by a NL compensation step 405 followed by a bulk CD filter 404 to compensate distortions of the received signals 407 caused by fiber nonlinearities and CD, respectively. The bulk CD filter 404 may be carried out using similar methods that have been applied for the bulk CD filter 204 in the processor 210 of **Fig. 2(a)**. It is appreciated that the filtered signal power in the additional path 410' may be multiplied with a weighting factor 427 and thereafter sent to the NL compensation step 405. As the signal power has been measured and filtered separately in the additional path 410', the NL compensation step 405 may only apply a phase rotation to the sampled electrical complex signals 400x, 400y. In other words, this scheme has the advantage that the processing of the power is done in a parallel path and in the signal path only a phase rotation is performed. It is further appreciated that the components used in the parallel path, e.g. optical-to-electrical converter 422 and ADC 423, should be linear and may be of low bandwidth (around 10% of the signal bandwidth), respectively, and are therefore low cost.

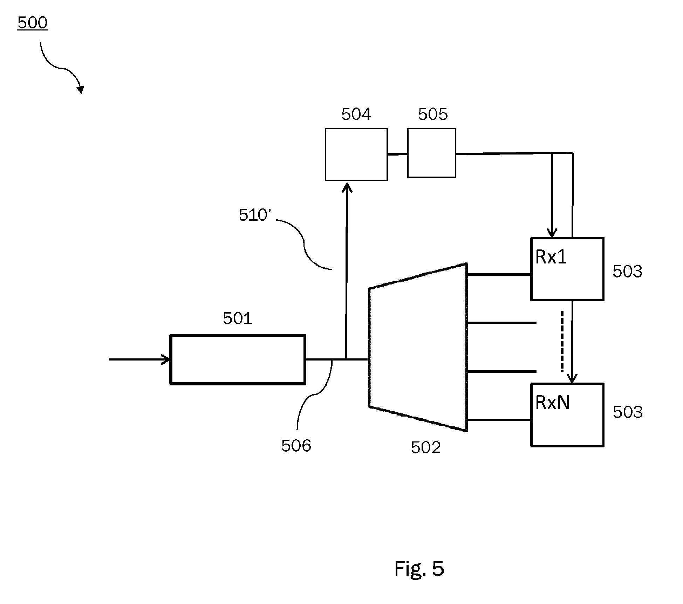

**Fig. 5** schematically illustrates an example of a backpropagation-less nonlinearity compensation model using measured signal power in wavelength-division-multiplexing (WDM) transmission 500 according to embodiments of the disclosure. Optical signals of WDM channels 501 output from a transmission link are split into an additional path 510' through, e.g. a splitter. The WDM signals 506 are received by a channel demultiplexer 502, e.g. an arrayed-waveguide grating (AWG), and then directed to respective coherent optical receivers 503 which correspond to individual channels of the WDM signals 506. The additional path 510' comprises an optical-to- electrical converter 504 and an additional ADC 505. The received optical signal power is measured separately in the additional path 510'. The measured signal power is then sent to the coherent optical receivers 503 for implementing the NL compensation step described in **Fig. 4****.** It is appreciated that the power of the WDM signals 506 may be optionally measured in front of the channel demultiplexer 502 and distributed to the individual receivers 503 due to the real valued positive signal of the measured powerto allow for inter-channel nonlinearity compensation. It is to be noted that the largest benefit of measuring the signal power instead of calculating it is that it can be accomplished outside of the receiver itself and fed separately from the signal itself to the receiver. Moreover, the components used for measuring the WDM signal power, e.g. optical-to-electrical converter 504 and ADC 505, should be linear and may be of low bandwidth with moderate sampling rate, respectively, and therefore are low cost.

It should be noted that the device features described above correspond to respective method features that are however not explicitly described, for reasons of conciseness. The disclosure of the present document is considered to extend also to such method features.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for compensating optical transmission impairments of at least one fiber link in an optical transmission system, wherein the optical transmission impairments comprising at least chromatic dispersion and fiber nonlinearities cause distortions to at least one signal transmitted through the at least one fiber link, the method comprising:
estimating an amount of chromatic dispersion of the at least one fiber link;
applying a first filtering step for compensating for an amount of fiber nonlinearities of the at least one fiber link; and
applying a second filtering step for compensating for the amount of chromatic dispersion of the at least one fiber link, wherein:
the first filtering step for compensating for the amount of fiber nonlinearities is applied prior to the second filtering step for compensating for the amount of chromatic dispersion; and
applying the first filtering step comprises:
obtaining power of the at least one signal transmitted through the at least one fiber link;
filtering the obtained power of the at least one signal based on the estimated amount of chromatic dispersion of the at least one fiber link; and
applying, based on the filtered obtained power of the at least one signal, a phase rotation to the at least one signal for compensating for the amount of fiber nonlinearities.

2. The method according to claim 1, wherein the obtained power of the at least one signal is filtered using one or more low-pass filters (LPFs), further comprising determining the number and values of coefficients of the one or more LPFs and/or determining a weighting factor for the one or more LPFs.

3. The method according to claim 2, wherein the number and the values of coefficients of the one or more LPFs are determined based on the estimated amount of chromatic dispersion of the at least one fiber link.

4. The method according to claim 2, wherein the weighting factor for the one or more LPFs is determined based on an amount of nonlinear phase rotation occurring during fiber transmission.

5. The method according to claim 3 or 4, further comprising updating or tuning the number and the values of coefficients of the one or more LPFs by a Q-factor Q_{NL} or adapting the weighting factor of the one or more LPFs to optimum performance by a Q-factor Q_{NL}.

6. The method according to any of the preceding claims, further comprising:
splitting the at least one signal into an additional path; and
measuring the power of the at least one signal in the additional path.

7. The method according to claim 6, wherein filtering the obtained power of the at least one signal is performed in the additional path.

8. The method according to any of the preceding claims, further comprising compensating for a frequency offset between a local oscillator (LO) and a transmitter laser.

9. The method according to any of the preceding claims, further comprising compensating for nonlinear phase distortions of a transmitter.

10. The method according to any of the preceding claims, further comprising compensating for the distortions caused by fiber nonlinearities that occur in the first few kilometers of the fiber link.

11. A device for compensating optical transmission impairments of at least one fiber link in an optical transmission system, wherein the optical transmission impairments comprising at least chromatic dispersion and fiber nonlinearities cause distortions to at least one signal transmitted through the at least one fiber link, the device comprising:
a chromatic dispersion measuring unit configured to estimate an amount of chromatic dispersion of the at least one fiber link;
a first filtering unit configured to apply a first filtering step for compensating for an amount of fiber nonlinearities of the at least one fiber link; and
a second filtering unit configured to apply a second filtering step for compensating for the amount of chromatic dispersion of the at least one fiber link, wherein:
the second filtering unit applies the second filtering step to the at least one signal output from the first filtering unit; and
the first filtering unit is configured to:
obtain power of the at least one signal transmitted through the at least one fiber link;
filter, using one or more low-pass filters (LPFs), the obtained power of the at least one signal based on the estimated amount of chromatic dispersion of the at least one fiber link; and
apply, based on the filtered obtained power of the at least one signal, a phase rotation to the at least one signal for compensating for the amount of fiber nonlinearities.

12. The device according to claim 11, further comprising a splitter to split the at least one signal into an additional path, wherein a power measuring unit to measure the power of the at least one signal in the additional path is provided.

13. The device according to claim 12, wherein:
the optical transmission system is a wavelength-division multiplexing (WDM) system;
the power measuring unit to measure the power of the at least one signal is placed in front of a channel demultiplexer; and
a power distributing unit to distribute the power of the at least one signal to individual receivers is provided.

14. The device according to any of claims 11 to 13, further comprising an additional nonlinear compensator configured to further compensate for nonlinear phase distortions of a transmitter.

15. The device according to any of claims 11 to 14, further comprising a linear compensator configured to further compensate for a certain amount of residual dispersion that compensates for the distortions caused by fiber nonlinearities occurring in the first few kilometers of the fiber link.

## Amended claims

### Amended claims in accordance with Rule 137(2) EPC.

1. A method for electrically compensating optical transmission impairments of at least one fiber link in a coherent optical transmission system, wherein the optical transmission impairments comprising at least chromatic dispersion and fiber nonlinearities cause distortions to at least one signal transmitted through the at least one fiber link, the method comprising:
estimating (S2) an amount of chromatic dispersion of the at least one fiber link;
applying (S3) a first filtering step (205) for compensating for an amount of fiber nonlinearities of the at least one fiber link; and
applying (S4) a second filtering step (204) for compensating for the amount of chromatic dispersion of the at least one fiber link, wherein:
the first filtering step (205) for compensating for the amount of fiber nonlinearities is applied prior to the second filtering step (204) for compensating for the amount of chromatic dispersion; and
applying (S3) the first filtering step (205) comprises:
obtaining power (225) of the at least one signal transmitted through the at least one fiber link;
low-pass filtering the obtained power of the at least one signal based on the estimated amount of chromatic dispersion of the at least one fiber link; and
applying, based on the filtered obtained power of the at least one signal, a phase rotation (226) to the at least one signal for compensating for the amount of fiber nonlinearities.

2. The method according to claim 1, wherein the obtained power of the at least one signal is filtered using one or more low-pass filters, LPFs, (2053, 221, 222, 223) further comprising determining the number and values of coefficients (304, 324) of the one or more LPFs (2053, 221, 222, 223) and/or determining a weighting factor (314, 324) for the one or more LPFs (2053, 221, 222, 223).

3. The method according to claim 2, wherein the number and the values of coefficients (304, 324) of the one or more LPFs (2053, 221, 222, 223) are determined based on the estimated amount of chromatic dispersion of the at least one fiber link.

4. The method according to claim 2, wherein the weighting factor (314, 324) for the one or more LPFs (2053, 221, 222, 223) is determined based on an amount of nonlinear phase rotation occurring duringfiber transmission.

5. The method according to claim 3 or 4, further comprising updating or tuning the number and the values of coefficients (304, 324) of the one or more LPFs (2053, 221, 222, 223) by a Q-factor Q_{NL} (303, 313, 323) or adapting the weighting factor (314, 324) of the one or more LPFs (2053, 221, 222, 223) to optimum performance by a Q-factor Q_{NL} (303, 313, 323).

6. The method according to any of the preceding claims, further comprising:
splitting the at least one signal into an additional path (410', 510'); and
measuring the power of the at least one signal in the additional path (410', 510').

7. The method accordingto claim 6, wherein low-pass filtering the obtained power of the at least one signal is performed in the additional path (410', 510').

8. The method according to any of the preceding claims, further comprising compensating for a frequency offset between a local oscillator, LO, (208, 258, 408) and a transmitter laser.

9. The method according to any of the preceding claims, further comprising compensating for nonlinear phase distortions of a transmitter.

10. The method according to any of the preceding claims, further comprising compensating for the distortions caused by fiber nonlinearities that occur in the first few kilometers of the fiber link.

11. A device (200, 200', 400, 503) for electrically compensating optical transmission impairments of at least one fiber link in a coherent optical transmission system, wherein the optical transmission impairments comprising at least chromatic dispersion and fiber nonlinearities cause distortions to at least one signal transmitted through the at least one fiber link, the device comprising:
a chromatic dispersion measuring unit (202, 252, 402) configured to estimate an amount of chromatic dispersion of the at least one fiber link;
a first filtering unit (205, 255, 405) configured to apply a first filtering step for compensating for an amount of fiber nonlinearities of the at least one fiber link; and
a second filtering unit (204, 254, 404) configured to apply a second filtering step for compensating for the amount of chromatic dispersion of the at least one fiber link, wherein:
the second filtering unit (204, 254, 404) applies the second filtering step to the at least one signal output from the first filtering unit (205, 255, 405); and
the first filtering unit (205, 255, 405) is configured to:
obtain power (225) of the at least one signal transmitted through the at least one fiber link;
filter, using one or more low-pass filters, LPFs, (2053, 221, 222, 223) the obtained power of the at least one signal based on the estimated amount of chromatic dispersion of the at least one fiber link; and
apply, based on the filtered obtained power of the at least one signal, a phase rotation (226) to the at least one signal for compensating for the amount of fiber nonlinearities.

12. The device according to claim 11, further comprising a splitter to split the at least one signal into an additional path (410', 510'), wherein a power measuring unit to measure the power of the at least one signal in the additional path (410', 510') is provided.

13. The device according to claim 12, wherein:
the optical transmission system is a wavelength-division multiplexing (WDM) system (500);
the power measuring unit to measure the power of the at least one signal is placed in front of a channel demultiplexer (502); and
a power distributing unit to distribute the power of the at least one signal to individual receivers (503) is provided.

14. The device according to any of claims 11 to 13, further comprising an additional nonlinear compensator (259) configured to further compensate for nonlinear phase distortions of a transmitter.

15. The device according to any of claims 11 to 14, further comprising a linear compensator configured to further compensate for a certain amount of residual dispersion that compensates for the distortions caused by fiber nonlinearities occurring in the first few kilometers of the fiber link.
